# EUROPEAN PATENT APPLICATION

(11) **EP 4 692 734 A1**
(43) Date of publication of application: **11.02.2026**
(21) Application number: 24193859.6
(22) Date of filing: 09.08.2024
(51) Int. Cl.: G01D 21/00, H04Q 9/00, H02J 50/00, G01K 1/00

(54) **ENERGY HARVESTING SENSOR AS WELL AS METHOD OF MEASURING PHYSICAL QUANTITY WITH AN ENERGY HARVESTING SENSOR**

(71) Applicant: ABB SCHWEIZ AG, 5400 Baden (CH)
(72) Inventor: Boron, Artur, 32-070 Czernichow (PL); Pypec, Stefan, 31-215 Kraków (PL)
(74) Representative: AOMB Polska Sp. z.o.o.

(57) **Abstract**

The present disclosure relates to the field of sensors used to perform system diagnostic. Accordingly a novel energy harvesting sensor, as well as method of measuring physical quantity with an energy harvesting sensor is proposed.

An energy harvesting sensor comprises an energy harvesting transducer (1), an energy harvester (2), an energy storage (3), an energy level controller (4) with shutdown input, a load switch (5), preferably a sensor (6), and wireless communication module (7). The energy harvesting transducer (1) is configured to convert an energy from a physical quantity to an electrical energy, preferably from a measured physical quantity, wherein even more preferably the energy harvesting transducer (1) is configured to measure the measured physical quantity. The energy harvester (2) is configured to act as a power source powered by the energy harvesting transducer (1). The energy storage (3) is configured to store the energy from the energy harvester (2), and the energy level controller (4) is configured to monitor an amount of the energy stored in the energy storage (3) and, when an energy threshold is reached, is further configured to actuate the load switch (5). The load switch (5) is connected such that, when on, allows the energy stored in the energy storage (3) to power the sensor (6) and the wireless communication module (7) which is configured to wirelessly transmit data from the sensor (6).

The disclosure also pertains to a method of measuring physical quantity with such an energy harvesting sensor.

## Description

### TECHNICAL FIELD

The present disclosure relates to the field of sensors used to perform a system diagnostic. Accordingly a novel energy harvesting sensor, as well as method of measuring a physical quantity with an energy harvesting sensor is proposed.

### BACKGROUND OF THE DISCLOSURE

The number of sensors used in the industry is growing to enable better diagnostic systems and allow preventive maintenance instead of a failure. This creates a challenge for a system wiring as a huge number of wires are routed to system control nodes. This consumes a lot of space, generates installation costs, reduces cooling efficiency of electrical equipment by blocking the airflow and may cause problems with electrical isolation.

To solve the problem of wiring, wireless sensors are being developed. The most common solution is to make them still connected to local power supply or use a battery. This is a partial solution only and has drawbacks.

There are also wireless solutions which use a wireless power transfer like RFID technology, but it has a limited operating range and limitations in applications.

In the research area, solutions for energy harvesting are developed to cut dependency from cables and batteries. The combination of energy harvesting and wireless communication is a solution to the original problem but today is limited by an amount of an energy which can be harvested.

The limited energy does not allow sensors to obtain high sampling rates, what can make them useless for some of the applications.

Document US20180351404A1 discloses a self-powered wireless sensor and sensor module. The wireless sensor and sensor module includes a harvesting circuit configured to collect power from an external environment, a sensor unit configured to comprise one or more sensors, a controller configured to store data collected by the sensor unit, and a wireless communication unit configured to transmit the sensor data stored in the controller to a destination.

Document EP4009056A1 discloses a sensing device for monitoring an electrical component or apparatus is described. The sensing device is attachable to an electrical conductor and includes a sensor for measuring at least one physical property, a wireless communication unit for transmitting measurement data to a receiver, an energy harvesting unit configured to harvest energy from a current flowing through the electrical conductor and comprising an electromagnetic coil wound around a core, and a connection mechanism to make the core connectable to a strap comprising a material having a high magnetic permeability. The sensing device is configured to be operable when no strap is connected to the core and energy is harvested via an open magnetic circuit as well as when a strap is connected to the core and energy is harvested via a closed magnetic circuit.

Document US20110248846A1 discloses a wireless sensing module with extended service life containing at least one sensor of a physical parameter, a data acquisition hardware acquiring output electrical signals from at least one sensor and converting it into digital measurement data, a microcontroller, a non-volatile memory, at least one transceiver for wireless communication with external wireless devices, at least one battery, including at least one re-chargeable battery, at least one energy harvesting device, a power management circuit, and at least one antenna. All components of the wireless sensing module are mounted on a printed circuit board and placed into an enclosure providing mechanical, chemical, electrical and environmental protection.

### SUMMARY OF THE DISCLOSURE

The subject-matter of the invention provides an energy harvesting sensor, comprising: an energy harvesting transducer, an energy harvester, an energy storage, an energy level controller with shutdown input, a load switch, preferably a sensor, a wireless communication module. The energy harvesting transducer is configured to convert an energy from a physical quantity to an electrical energy, preferably from a measured physical quantity, wherein even more preferably the energy harvesting transducer is configured to measure the measured physical quantity. The energy harvester is configured to act as a power source powered by the energy harvesting transducer. The energy storage is configured to store the energy from the energy harvester, and the energy level controller is configured to monitor an amount of the energy stored in the energy storage and, when an energy threshold is reached, is further configured to actuate the load switch. The load switch is connected such that, when on, allows the energy stored in the energy storage to power the sensor and the wireless communication module which is configured to wirelessly transmit data from the sensor.

Preferably the measured physical quantity is a light intensity, a temperature, an air/fluid flow, a vibration, a strain, a radio frequency radiation, an infrared radiation, an electric field, or a corrosion rate.

In one embodiment the energy harvesting transducer is a photovoltaic cell, a thermoelectric generator, an electric generator, a piezoelectric transducer, a magnetoelectric transducer, an antenna, an infrared photodiode, a capacitive coupler, an electrochemical cell.

In one of the preferred embodiments the wireless communication module is in a form of Bluetooth Low Energy, BLE, preferably as a System On-Chip, SoC, module.

The energy storage is in a form of at least one capacitor, and the energy level indicator is a voltage meter configured to measure voltage across the at least one capacitor.

Preferably it further comprising at least one the following: a memory, a real time clock, RTC, and/or a backup power supply preferably configured to power the RTC.

In one embodiment it further comprises a computation unit configured to calculate, on a basis of time between power cycles of the energy harvesting sensor or between data transmission events from the energy harvesting sensor, an average or a root mean square value of the physical quantity which powers the energy harvesting sensor.

The subject-matter of the invention provides a method of measuring physical quantity with an energy harvesting sensor, comprising steps of:
a) harvesting energy by an energy harvesting transducer, and storing energy in an energy storage,
b) powering a wireless communication module and other modules when a stored energy in the energy storage reaches a threshold value,
c) transmitting wirelessly data related to a measured physical quantity, preferably received from the sensor, by means of the wireless communication module, to a gateway.

Preferably in step c) additionally a timestamp is transmitted.

In one embodiment an additional step d) of sending a shutdown signal to an energy level controller which cuts off the power supply to the rest of the circuit.

In one of the preferred embodiments an additional step e) of calculating, on a basis of time between power cycles of the energy harvesting sensor or between data transmission events from the energy harvesting sensor, an average or a root mean square value of the physical quantity is performed.

Preferably the step e) is performed by the gateway.

The step e) is performed by the energy harvesting sensor, preferably by a computation unit.

In one embodiment in step c) an unique number is assigned to transmitted data in every cycle, preferably by randomly generating the unique number at the beginning of each cycle or by incrementing it in each cycle, to prevent the probability of miscalculation of the time that can occur when the wireless communication module retransmits the same data many times in order to increase the probability of receiving them by the gateway.

The goal of the present invention is to provide a solution which will be able to take measurements without a need of providing additional cables to such device.

### BRIEF DESCRIPTION OF THE DRAWINGS

The invention will now be further illustrated in a manufacturing example with reference to the attached drawing, in which:

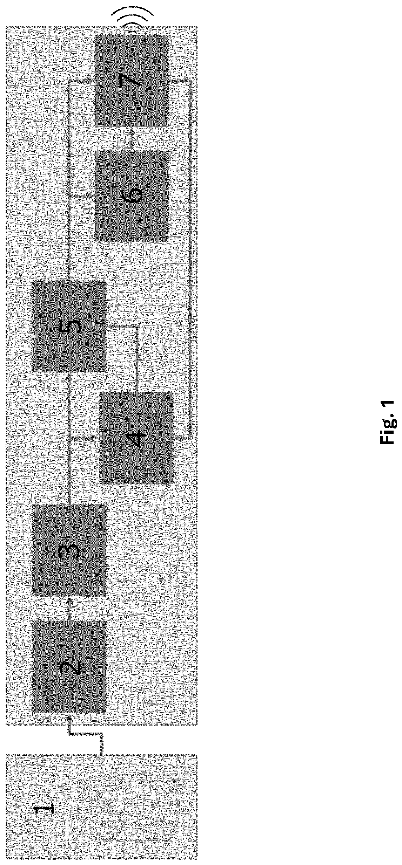

Fig. 1 - shows a diagram of the construction of the device.

### DETAILED DESCRIPTION OF THE DISCLOSURE

In the present disclosure an energy harvesting sensor as well as method of measuring physical quantity with an energy harvesting sensor are proposed which overcomes drawbacks known from the prior art.

The invention comprising of an energy harvesting sensor, comprising an energy harvesting transducer 1, an energy harvester 2, an energy storage 3, an energy level controller4, a load switch 5, preferably a sensor6, and a wireless communication module 7. In the preferred embodiment the energy harvesting transducer 1 is a separate device and other mentioned components form another device since this will give a possibility to change the energy harvesting transducer 1 as needed. It should be however noted that other solutions are also possible and the person skill in the art will know how to design such a device.

The energy harvesting transducer 1 is configured to convert an energy from a physical quantity to an electrical energy, wherein preferably this physical quantity is also a measured physical quantity. The energy harvesting transducer 1 may also be configured to measure the measured physical quantity, for example by measuring how long it take to harvest enough energy to turn on the energy harvesting sensor. Depending on the implementation, the measured physical quantity may be a light intensity, a temperature, an air/fluid flow, a vibration, a strain, a radio frequency radiation, an infrared radiation, an electric field, or a corrosion rate. The energy harvesting transducer 1 may be a photovoltaic cell, a thermoelectric generator, an electric generator, a piezoelectric transducer, a magnetoelectric transducer, an antenna, an infrared photodiode, a capacitive coupler, or an electrochemical cell depending on the chosen solution. It should be noted that any other devices which may generate an electrical energy may be used.

The energy harvester 2 is configured to act as a power source powered by the energy harvesting transducer 1. Since it is not possible to predict what amount of energy will be produced by the energy harvesting transducer 1 and what voltage and current will be available, it is a purpose of the energy harvester 2 to convert received energy to more useful one, that is to stabilize the voltage for example.

The energy storage 3 is configured to store the energy from the energy harvester 2 and the energy storage 3 is preferably in a form of at least one capacitor. The energy level indicator measuring energy level in an energy storage 3 is a voltage meter configured to measure voltage across the at least one capacitor. It should be noted that the energy level indicator may also use other principles to determine the amount of the energy, such as measuring time and current provided to the energy storage 3.

The energy level controller 4 is configured to monitor an amount of the energy stored in the energy storage 3 and it is configured to actuate the load switch 5 when an energy threshold is reached. In a preferred embodiment two threshold voltages are used and a hysteresis loop is implemented. In this embodiment the energy level controller 4 is based on a voltage comparator with hysteresis. If the energy reaches V+, the power turns on, if the energy falls below V-, the power turns off. Normally, V+ should be higher than V-but technically V+ and V- can be equal, ending up with a single threshold.

The load switch 5 allows the energy stored in the energy storage 3 to power the sensor 6, if present, and the wireless communication module 7 when the energy harvesting sensor is on.

The wireless communication module 7 is configured to wirelessly transmit data. Those data may be received from the at least one sensor 6 or may be a simple generated while the device is turned on which will enable to calculate the energy received from the energy harvesting transducer 1 since the time between each activation of the energy harvesting sensor will be proportional to the energy harvested by the energy harvesting transducer 1. Depending on the chosen solution, the wireless communication module 7 may be in a form of Bluetooth Low Energy, BLE, preferably as a System On-Chip, SoC, module. It should be noted that any other wireless communication may be suitable to use.

The energy harvesting sensor may additionally be equipped with a memory, a real time clock, RTC, and a backup power supply configured to power the RTC. In such a case the energy harvesting sensor will be able to estimate the energy harvested by the energy harvesting transducer 1 on its own. It will also be possible to generate a signal with a consecutive identification number, since it will be possible to store the last one in the memory, and thus a gateway, which will receive the signal, will be able to notice that some signals, and how many of them, have not been received. It should be noted that the memory, the RTC and the backup power supply may be chosen independently as needed in a specific application. The use of the RTC will most often require the use of the backup power supply, however if the energy harvesting transducer 1 is harvesting the energy from a reliable source (such as a electrical grid) it might not be necessary. The energy harvesting sensor may be also equipped with a computation unit configured to calculate, on a basis of time between power cycles of the energy harvesting sensor or between data transmission events from the energy harvesting sensor, an average or a root mean square value of the physical quantity which powers the energy harvesting sensor.

It should be also noted that a random identification number instead of the consecutive identification number may be used - it will allow to distinguish different data transmissions.

A method of measuring physical quantity with the energy harvesting sensor is also disclosed. In first step, step a, an energy is harvested by an energy harvesting transducer 1, and a harvested energy is stored in an energy storage 3. In second step, step b, a wireless communication module 7 and other modules are powered when a stored energy in the energy storage 3 reaches a threshold value. Other modules mentioned above should be understood as the energy level controller 4, the load switch 5, the sensor 6 and the computation unit. In next step, step c, data related to a measured physical quantity, preferably received from the sensor 6, are transmitted wirelessly, by means of the wireless communication module 7, to a gateway.

Additionally, in step c, a timestamp, a random identification number, or a consecutive identification number is transmitted.

In additional step d, a shutdown signal is sent to an energy level controller 4 in order to cut off the power supply to the rest of the circuit.

In additional step e, an average or a root mean square value of the physical quantity is calculated, on a basis of time between power cycles of the energy harvesting sensor or between data transmission events from the energy harvesting sensor. The step e may be performed by the gateway or the energy harvesting sensor, preferably a computation unit on the energy harvesting sensor.

Additionally, in step c, the energy harvesting sensor can assign a unique number to transmitted data in every cycle to prevent the probability of miscalculation of the time that can occur when the energy harvesting sensor retransmits the same data many times in order to increase the probability of receiving them by the gateway or any other data receiver. In first example, an unique number is randomly generated at the beginning of each cycle. In another example, an unique number is incremented it in each cycle.

### LIST OF REFERENCE NUMERALS USED

- 1: energy harvesting transducer
- 2: energy harvester
- 3: energy storage
- 4: energy level controller
- 5: load switch
- 6: sensor
- 7: wireless communication module

## Claims

1. An energy harvesting sensor, comprising:
an energy harvesting transducer (1),
an energy harvester (2),
an energy storage (3),
an energy level controller (4) with shutdown input,
a load switch (5),
preferably a sensor (6),
a wireless communication module (7),
wherein the energy harvesting transducer (1) is configured to convert an energy from a physical quantity to an electrical energy, preferably from a measured physical quantity, wherein even more preferably the energy harvesting transducer (1) is configured to measure the measured physical quantity,
wherein the energy harvester (2) is configured to act as a power source powered by the energy harvesting transducer (1),
wherein the energy storage (3) is configured to store the energy from the energy harvester (2), and the energy level controller (4) is configured to monitor an amount of the energy stored in the energy storage (3) and, when an energy threshold is reached, is further configured to actuate the load switch (5),
wherein the load switch (5) is connected such that, when on, allows the energy stored in the energy storage (3) to power the sensor (6) and the wireless communication module (7) which is configured to wirelessly transmit data from the sensor (6).

2. The energy harvesting sensor according to claim 1, wherein the measured physical quantity is a light intensity, a temperature, an air/fluid flow, a vibration, a strain, a radio frequency radiation, an infrared radiation, an electric field, or a corrosion rate.

3. The energy harvesting sensor according to claim 2, wherein the energy harvesting transducer (1) is a photovoltaic cell, a thermoelectric generator, an electric generator, a piezoelectric transducer, a magnetoelectric transducer, an antenna, an infrared photodiode, a capacitive coupler, an electrochemical cell.

4. The energy harvesting sensor according to anyone of claims 1-3, wherein the wireless communication module (7) is in a form of Bluetooth Low Energy, BLE, preferably as a System On-Chip, SoC, module.

5. The energy harvesting sensor according to anyone of claims 1-4, wherein the energy storage (3) is in a form of at least one capacitor, and the energy level indicator is a voltage meter configured to measure voltage across the at least one capacitor.

6. The energy harvesting sensor according to anyone of claims 1-5, wherein it further comprising at least one the following: a memory, a real time clock, RTC, and/or a backup power supply preferably configured to power the RTC.

7. The energy harvesting sensor according to claim 6, wherein it further comprises a computation unit configured to calculate, on a basis of time between power cycles of the energy harvesting sensor or between data transmission events from the energy harvesting sensor, an average or a root mean square value of the physical quantity which powers the energy harvesting sensor.

8. A method of measuring physical quantity with an energy harvesting sensor according to claim 1-7, comprising steps of:
a) harvesting energy by an energy harvesting transducer (1), and storing energy in an energy storage (3),
b) powering a wireless communication module (7) and other modules when a stored energy in the energy storage (3) reaches a threshold value,
c) transmitting wirelessly data related to a measured physical quantity, preferably received from the sensor (6), by means of the wireless communication module (7), to a gateway.

9. The method according to claim 8, wherein in step c) additionally a timestamp is transmitted.

10. The method according to claim 8 or 9, wherein an additional step d) of sending a shutdown signal to an energy level controller (4) which cuts off the power supply to the rest of the circuit.

11. The method according to anyone of claims 8-10, wherein an additional step e) of calculating, on a basis of time between power cycles of the energy harvesting sensor or between data transmission events from the energy harvesting sensor, an average or a root mean square value of the physical quantity is performed.

12. The method according to claim 11, wherein the step e) is performed by the gateway.

13. The method according to claim 11, wherein the step e) is performed by the energy harvesting sensor, preferably by a computation unit.

14. The method according to anyone of claims 8-12, wherein in step c) an unique number is assigned to transmitted data in every cycle, preferably by randomly generating the unique number at the beginning of each cycle or by incrementing it in each cycle, to prevent the probability of miscalculation of the time that can occur when the wireless communication module (7) retransmits the same data many times in order to increase the probability of receiving them by the gateway.
